# EUROPÄISCHE PATENTSCHRIFT

(11) **EP 1 240 071 B1**
(45) Veröffentlichungstag und Bekanntmachung des Hinweises auf die Patenterteilung: **15.10.2003**
(21) Anmeldenummer: 00987117.9
(22) Anmeldetag: 09.11.2000
(51) Int. Cl.: B62D 65/00, B66F 7/00

(54) **HEBEVORRICHTUNG MIT EINER FÜHRUNG FÜR LASTEN**
LIFTING DEVICE WITH A GUIDE DEVICE FOR LOADS
DISPOSITIF DE LEVAGE DOTE DE MOYENS DE GUIDAGE DES CHARGES

(30) Priorität: 24.11.1999 DE 19957468
(43) Veröffentlichungstag der Anmeldung: 18.09.2002
(73) Patentinhaber: SIEMENS AKTIENGESELLSCHAFT, 80333 München (DE)
(72) Erfinder: ASSMANN, Roland, 633654 BÜDINGEN (DE)
(86) Internationale Anmeldenummer: DE0003965
(87) Internationale Veröffentlichungsnummer: WO01038162

(56) Entgegenhaltungen:
- DE-A- 4 326 563
- DE-U- 9 408 846
- DE-U- 9 408 847

## Beschreibung

Die Erfindung betrifft eine Hebevorrichtung mit einer Führung für Lasten gemäß dem Oberbegriff des Anspruches 1.

Aus dem deutschen Gebrauchsmuster DE 94 08 847 ist bereits eine höhenverstellbare Tragvorrichtung, wie beispielsweise ein C-Haken oder ein Scherengehänge, bekannt. Die Tragvorrichtung ist Bestandteil eines Schienenfahrzeuges einer Elektrohängebahn, die u. a. in der Automobilfertigung Anwendung findet, um Fahrzeugteile und das zu fertigende Fahrzeug in seiner jeweiligen Fertigungsstufe zwischen den einzelnen Montageorten bzw. während der Montage zu transportieren. In diesem Zusammenhang ist es von Vorteil, wenn die Tragvorrichtung für das in der Montage befindliche Fahrzeug höhenverstellbar ist, da hierdurch bei einfacher horizontaler Verlegung der Schienen für die Elektrohängebahn die Tragvorrichtung mit dem Schienenfahrzeug in den Montagebereich abgesenkt werden kann. Da derartige Montagevorgänge häufig automatisiert ablaufen, ist eine genaue Positionierung des Schienenfahrzeuges und somit der Tragvorrichtung erforderlich. Daher muss über Führungselemente eine Führung der Tragvorrichtung in Fahrtrichtung des Schienenfahrzeuges sowie quer hierzu gewährleistet sein; eine bloße Aufhängung der Tragvorrichtung in Zugmitteln ist nicht ausreichend,

Eine hierfür geeignete höhenverstellbare Tragvorrichtung ist in dem vorgenannten deutschen Gebrauchsmuster DE 94 08 847 bereits beschrieben. Das Lastaufnahmemittel für das zu fertigende Fahrzeug bzw. die Fahrzeugteile ist hier über drei ineinander verschiebare Teleskopschüsse in Hub- und Senkrichtung bewegbar und zusätzlich seitlich geführt. Dementsprechend ist im ausgefahrenen Zustand das unterste Ende des innersten Teleskopschusses mit dem Lastaufnahmemittel sowie das obere Ende des äußeren Teleskopschusses mit dem Schienenfahrzeug verbunden. Die Teleskopschüsse sind mit ihrer Längserstreckung hierbei im Wesentlichen vertikal ausgerichtet. Das Zusammenfahren der Teleskopschüsse und somit ein Anheben des Lastaufnahmemittels erfolgt über ein an dem innersten Teleskopschuss angreifendes Zugseil, das mit einem an dem Schienenfahrzeug angeordneten Hubwerk verbunden ist. Das Absenken des Lastaufnahmemittels und somit das Ausfahren der Teleskopschüsse erfolgt unter Nachlassen des Zugmittels bei gleichzeitiger Einwirkung der Schwerkraft auf die Teleskopschüsse und das Lastaufnahmemittel.

Bezüglich der Ausbildung der Hebevorrichtung mit der dreischüssigen Teleskopvorrichtung ist anzumerken, dass hierdurch zwar ein großer Hub erreicht wird, jedoch die Teleskopschüsse aufwendig untereinander geführt werden müssen, um die spielarme Positionierbarkeit der Lastaufnahmemittel zu erreichen. Auch ist durch die zentrale Anordnung der Teleskopiervorrichtung an dem Schienenfahrzeug eine Einschienenhängebahn mit einer stark exzentrischen Anordnung des Lastaufnahmemittels verbunden. Daraus resultieren hohe Momente in den Führungselementen, die eine entsprechende Versteifung des Grundrahmens des Schienenfahrzeuges erfordem. Auch weist das an der Teleskopiervorrichtung angeordnete rahmenförmige Aufnahmemittel für die Fahrzeuge und Fahrzeugteile Querträger auf, die anscheinend unterhalb der Last angeordnet sind. Diese Querverbindungen erweisen sich als nachteilig insbesondere bei dem Absenken der Karosserie auf das Fahrwerk während der Fertigung. Auch ist der mittlere Teleskopschuss nicht zwangsgeführt, so dass dieser beispielsweise beim Absenken des Aufnahmemittels hängenbleiben kann, ohne dass dies durch eine Schlaffseilabschaltung erkannt werden kann.

Des Weiteren ist aus dem deutschen Gebrauchsmuster DE 94 08 846 eine weitere ähnlich aufgebaute höhenverstellbare Tragvorrichtung bekannt. Hier ist jedoch zwischen dem Schienenfahrzeug und dem Lastaufnahmemittel anstatt der Teleskopiervorrichtung eine Schere vorgesehen. Der Antrieb für die Hub- und Senkbewegung erfolgt wiederum über ein an dem Lastaufnahmemittel angreifendes Zugmittel, das mit einem an dem Schienenfahrzeug angeordneten Hubwerk zusammenwirkt.

Die Ausgestaltung der Hebevorrichtung mit dem Scherensystem erweist sich als konstruktiv sehr aufwendig, da zur Weiterleitung der Führungskräfte auf das Lastaufnahmemittel dieses einen konstruktiv aufwendigen Grundrahmen aufweisen muss. Wenn besonders lange Hübe z. B. über 4m erforderlich werden, erweist sich die Verwendung von Scherenelementen als nachteilig, da diese dann etwa 6m lang wären. Auch ist für die Führung der unteren Enden der Scherenelementen ein konstruktiv aufwendiger und in Fahtrichtung des Schienenfahrzeuges ausladender Unterrahmen erforderlich, der die Zugänglichkeit zum Motor und Kofferraum der Karosserie behindert. Des Weiteren erweist sich als nachteilig, das Hubwerk für das Scherensystem in Fahrtrichtung gesehen am hinteren Ende anzuordnen, da hierdurch die Länge des Schienenfahrzeuges vergrößert wird. Auch ist hierdurch die Verwendung einer weiteren Umlenkrolle für das Hubseil erforderlich.

Der Erfindung liegt die Aufgabe zugrunde, eine Hebevorrichtung mit einer Führung für Lasten zu schaffen, die eine große Hub-/Senkbewegung der Last bei gleichzeitig geringer Bauhöhe der Hebevorrichtung aufweist.

Diese Aufgabe wird durch eine Hebevorrichtung mit den im Anspruch 1 aufgeführten Merkmalen gelöst. Vorteilhafte Ausgestaltungen der Erfindung sind in den Unteransprüchen 2 bis 14 angegeben.

Die zur Rede stehende Hebevorrichtung für Lasten zeichnet sich in vorteilhafter Weise dadurch aus, dass einerseits im abgesenkten Zustand des Lastaufnahmemittels eine Führung des Lastaufnahmemittels quer zur Hub- und Senkrichtung durch einen starren, in Hub- und Senkrichtung verlaufenden Längsträger erfolgt und andererseits dieser starre Längsträger nach Art einer Gliederkette in zumindest zwei Abschnitte geteilt ist, die jeweils über ein Gelenk quer zur Hub- und Senkrichtung klappbar miteinander verbunden sind. Hierdurch wird erreicht, dass neben der starren Führung des abgesenkten Lastaufnahmemittels ein seitliches Einklappen des Längsträgers möglich ist, um somit ein Anheben des Lastaufnahmemittels über einen großen Hubweg bei gleichzeitig geringer Bauhöhe der Hebeeinrichtung zu ermöglichen. In besonders einfacher Weise wird die Ein- und Ausklappbewegung der oberen Abschnitte des Längsträgers über eine Führungsschiene erreicht, die an dem Grundrahmen der Hebevorrichtung angeordnet ist. Hierzu weist die Führungsschiene einen an dem oberen Ende des Führungselementes angrenzenden und beginnenden geradlinigen Abschnitt auf, der im wesentlichen vertikal verläuft, an dem sich ein kurvenförmiger Abschnitt anschließt, der in einen weiteren geradlinigen und im wesentlichen quer zur Quer- und Senkrichtung ausgerichteten Abschnitt mündet. In diese Führungsschiene greifen Mitnahmeelemente ein, die an den jeweiligen oberen Enden der oberen Abschnitte der Längsträger angeordnet sind. Beim Anheben des Lastaufnahmemittels werden somit die Mitnahmeelemente in den Führungsschienen geführt und leiten somit die Einklappbewegung der Abschnitte des Längsträgers zu einem Zeitpunkt ein, zu dem diese das Führungselement verlassen haben und somit nicht mehr mit der Last beaufschlagt sind. Zu diesem Zeitpunkt nehmen die weiter unten gelegenen Abschnitte des Längsträgers die Führungsaufgaben wahr. Vorzugsweise sind die Mitnahmeelemente als Stifte ausgebildet, an deren Ende eine Rolle gelagert ist, die in der Führungsschiene verfährt.

Für eine Verwendung der Hebevorrichtung zum Anheben und Absenken von Fahrzeugkarosserien hat sich die Anordnung von zwei parallel und mit Abstand zueinander verlaufenden Längsträgem mit jeweils drei Abschnitten als vorteilhaft herausgestellt. Hierbei sind die unteren Abschnitte, vorzugsweise im Bereich ihrer oberen Enden jeweils über einen Querträger miteinander verbunden. An den unteren Enden der unteren Abschnitte der Längsträger sind Aufnahmemittel für die Last angeordnet. Somit wird von den Aufnahmeelementen eines Teils der unteren Abschnitte der Längsträger sowie des Querträgers ein kopfstehendes U-förmiges Lastaufnahmemittel gebildet.

Ein derartig ausgebildetes Lastaufnahmemittel sowie die zugehörige Hebevorrichtung mit den ktappbaren Längsträgem eignet sich besonders für den Einsatz in der Automobilfertigung, da dort zu dem Zeitpunkt der sogenannten Hochzeit während der Aulomobilfertigung die Karosserie, die an dem Lastaufnahmemittel hängt, auf das Fahrwerk abgesenkt werden muß. Dieser Montagevorgang kann besonders vorteilhaft mit der vorbeschriebene Hebevorrichtung ausgeübt werden. Die hierfür notwendige Präzision der Führung der Fahrzeugkarosserie wird durch die beiden starr geführten Längsträger erreicht.

Weiterhin als vorteilhaft erweist sich, dass das Führungselement für die Längsträger diesen jeweils nicht vollständig zu dessen Führung umgreift. Vorzugsweise wird ein Umfangsspalt beibehalten, so daß der Längsträger nur in einem Bereich von etwa 230 bis 310°, vorzugsweise 300° umgriffen wird. Hierdurch kann bei der Verwendung von zwei parallel zueinander verlaufenden und mit einem Querträger verbundenen Längsträgem der Querträger auch über das Niveau der Führungselemente hinaus angehoben werden, da dieser im Bereich des Umfangspaltes durch das Führungselement hindurchgeführt werden kann. Auch eignet sich der Querträger bevorzugt für ein zentrales Angreifen eines Zugmittels für das an dem Grundrahmen der Hebevorrichtung angeordnete Hubwerk.

Das Führungselement ist vorzugsweise mit Führungsrollen versehen, die um horizontale Achsen drehbar sind sowie über Exzenterachsen an die Oberfläche des Langsträgers anstellbar sind. Anstatt einer Führung über Rollen wäre eine Gleitführung hier auch denkbar. Vorzugsweise ist das Profil des Längsträgers als Rundrohr ausgebildet. Es ist auch denkbar, den Längsträgers mit einem prismatischen Querschnitt zu gestalten, wobei die Rollen an den Seitenflächen abrollen.

Für die Ein- und Ausklappbewegung der Abschnitte des Längsträgers zueinander sind diese über Gelenke mit quer zur Hub- und Senkrichtung ausgerichteten Schwenkachsen miteinander verbunden.

Für den zuvor beschriebenen Einsatz in der Automobilindustrie ist der Grundrahmen der Hebevorrichtung bevorzugt Bestandteil eines auf mindestens zwei nebeneinander angeordneten Schienen verfahrbaren Schienenfahrzeuges, das an dem Grundrahmen angeordnete und um senkrechte Achsen schwenkbare Fahrwerke aufweist.

Nachfolgend wird ein Ausführungsbeispiel der Erfindung anhand einer Zeichnung näher beschrieben. Es zeigen:
- Figur 1: eine Ansicht einer Hebevorichtung als Bestandteil einer Zweischienen-Elektrohängebahn mit einem kurvengängigen Schienenfahrzeug,
- Figur 2: eine Seitenansicht von Figur 1,
- Figur 3: eine weitere Seitenansicht von Figur 1, jedoch bei angehobenem Lastaufnahmemittel,
- Figur 4: eine Draufsicht auf Figur 1 und
- Figur 5: eine Schnittansicht von Figur 2 entlang der Schnittlinie I-I.

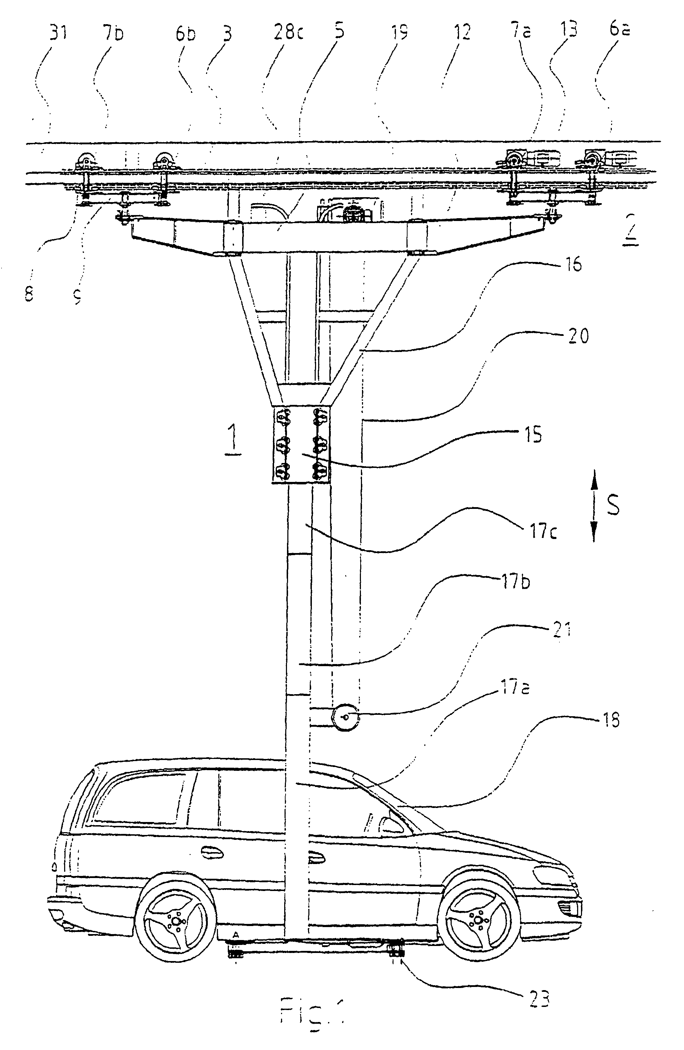

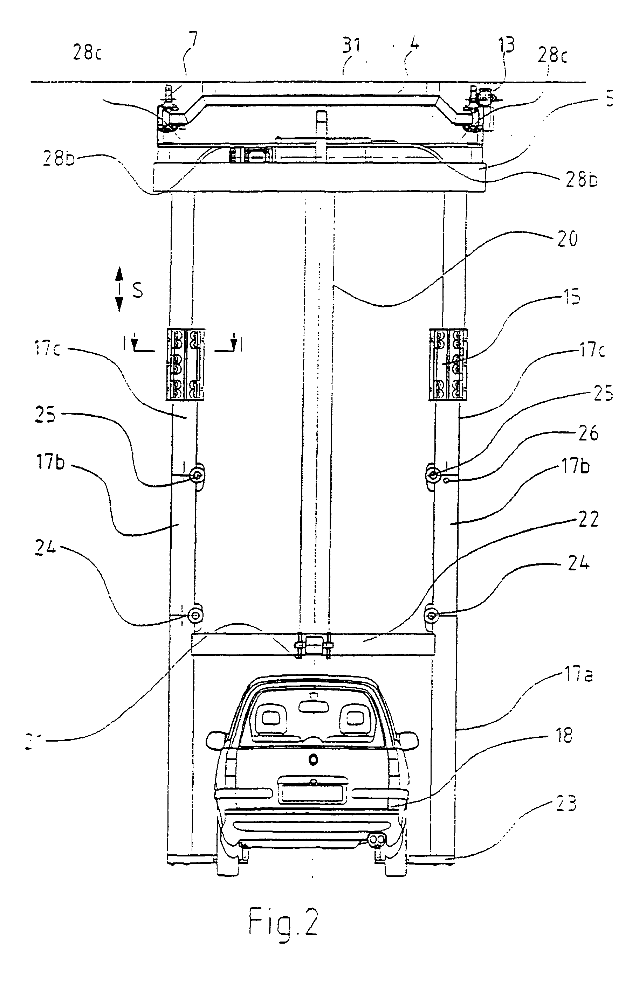

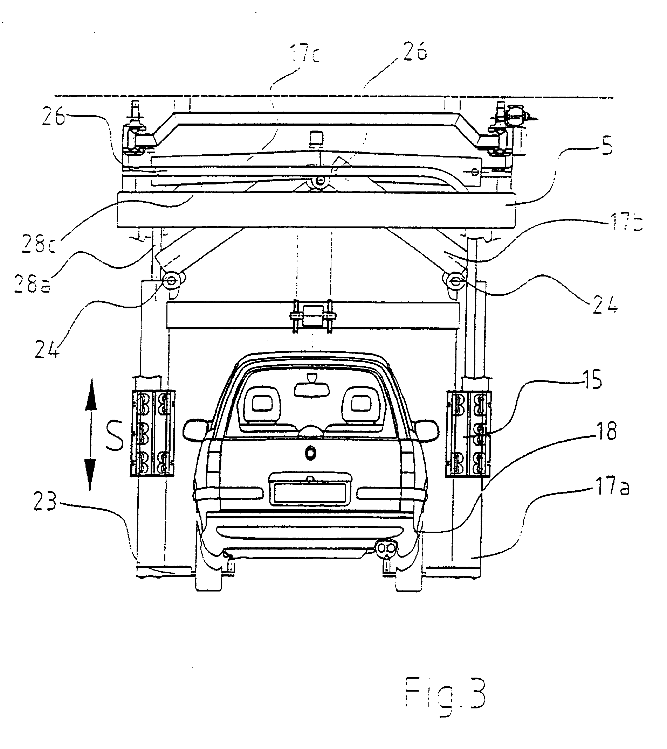

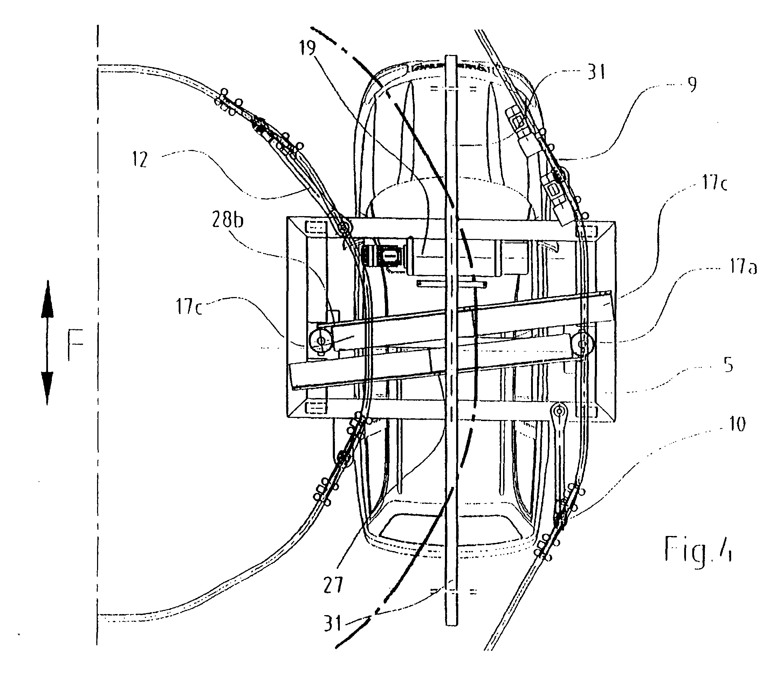

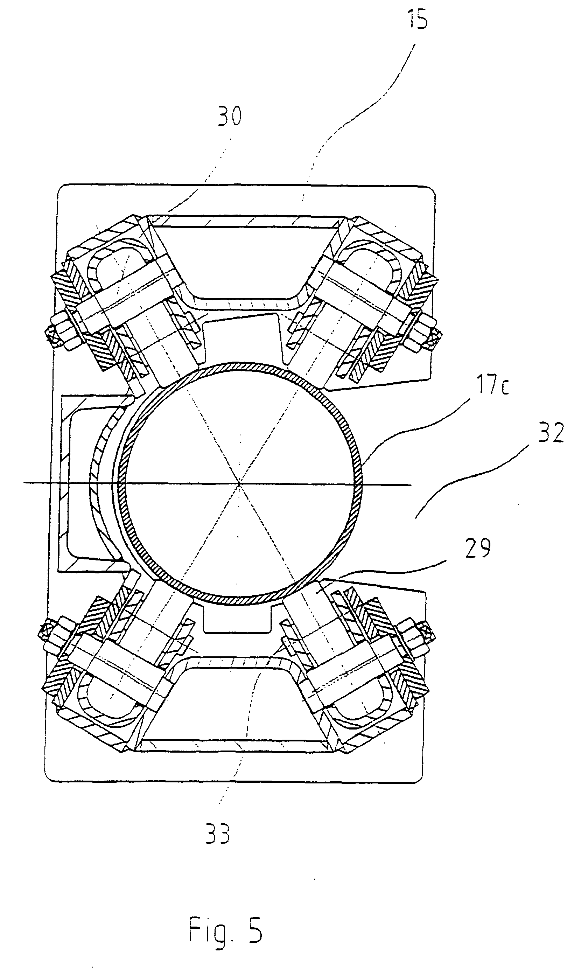

Die Figur 1 zeigt eine Ansicht einer Hebevorrichtung 1 als Bestandteil eines Transportsystems mit einem kurvengängigen Schienenfahrzeug 2. Da das Transportsystem als sogenannte Zweischienen-Elektrohängebahn ausgebildet ist, sind zwei nebeneinander und weitestgehend parallel zueinander ausgerichtete Schienen 3 vorgesehen (siehe auch Figur 4), an denen das Schienenfahrzeug 2 verfährt. Üblicherweise sind die Schienen 3 über eine Aufhängung 4 an der Deckenkonstruktion einer Fabrikationshalle befestigt (siehe Figur 2).

Zunächst wird das Schienenfahrzeug 2 anhand der Figur 1 und der Figur 4, die eine Draufsicht auf Figur 1 zeigt, näher beschrieben. Das Schienenfahrzeug 2 besteht im wesentlichen aus einem Grundrahmen 5, der über acht angetriebene und antriebslose Fahrwerke 6 auf den Schienen 3 abgestützt ist. Die antriebslosen Fahrwerke 6b sind im wesentlichen aus jeweils einem Laufrad 7b und vier Führungsrädern 8 aufgebaut. Die angetriebenen Fahrwerke 6a bestehen im wesentlichen aus jeweils einem Antriebsrad 7a und acht Führungsrädern 8. Die Führungsräder 8 laufen seitlich an den Ober- und Unterflanschen der vorzugsweise als I-Träger ausgebildeten Schiene 3 ab. Die Antriebsräder 7a und die Laufräder 7b rollen auf dem Oberflansch der Schiene 3 ab. Jeweils zwei der Fahrwerke 6 sind jeweils um senkrechte Achsen 10 schwenkbar mit einem Zwischenträger 9 verbunden. Auf einer Seite des Schienenfahrzeuges 2 sind die Zwischenträger 9 etwa mittig direkt über eine weitere senkrechte Achsen 11 im Bereich des in Fahrtrichtung F gesehen vorderen und hinteren Endes des Grundrahmens 5 gelagert. Auf der anderen Seite des Schienenfahrzeuges 2 sind die Zwischenträger 9 nicht direkt an dem Grundrahmen 5 angelenkt, sondem über weitere Schwenkarme 12 mit dem Grundrahmen 5 verbunden. Durch die Anlenkung der Zwischenträger 9 auf dieser Seite über die Schwenkarme 12 an dem Grundrahmen 5 ist es möglich, mit dem Schienenfahrzeug 2 auch Horizontalkurven zu durchfahren, sowie während der Fahrt Unregelmäßigkeiten bezüglich des Abstandes der parallel nebeneinander verlegten Schienen 3 auszugleichen.

Das Schienenfahrzeug 2 wird vorzugsweise über einen Elektroantrieb 13 angetrieben, der seitlich an dem Fahrwerk 6a angeflanscht ist. Der Elektroantrieb 13 ist über nicht dargestellte Stromabnehmer mit einer entlang der Schiene 3 angeordneten Schleifleitung elektrisch verbunden.

Grundsätzlich ist auch eine Verwendung der Hebevorrichtung 1 an einer Einschienenhängebahn oder stationär möglich.

An dem Grundrahmen 5 des Schienenfahrzeuges 2 ist die Hebevorrichtung 1 für ein Lastaufnahmemittel 14 aufgehängt. Die Hebevorrichtung 1 besteht im Wesentlichen aus hülsenförmigen Führungselementen 15, die über Verstrebungen 16 an der Unterseite des Grundrahmens 5 des Schienenfahrzeuges 2 aufgehängt sind. Aus der Figur 1 ist ersichtlich, dass die Ausrichtung des Führungselementes 15 so gewählt ist, dass hierdurch ein Längsträger 17 in Hub-/Senkrichtung S, d. h. im Wesentlichen in Vertikalrichtung, durch das hülsenförmige Führungselement 15 hindurch bewegbar sowie von diesem führbar ist. Der Längsträger 17 ist an seinem dem Führungselement 15 abgewandten Ende mit dem Lastaufnahmemittel 14 für die Last 18, beispielsweise einem Kraftfahrzeug befestigt. Andere Lasten, wie z.B. Paletten, Gitterboxen oder Container, können hiermit auch transportiert werden.

Des weiteren ist der Figur 1 zu entnehmen, dass an dem Grundrahmen 5 ein Hubwerk 19 angeordnet ist, über das das Lastaufnahmemittel 14 heb- und senkbar ist. Hierzu ist das Hubwerk 19 über ein Zugmittel 20 mit dem unteren Bereich des Längsträgers 17 verbunden. Die Verwendung einer Kette oder eines Gurtes als Zugmittel 20 ist auch möglich. Die Verbindung mit dem Lastaufnahmemittel 14 erfolgt über eine an dem Querträger 22 angreifende Umlenkrolle 21. Das Ende des Zugmittels 20 ist im Bereich des Hubwerkes 19 an dem Grundrahmen 5 befestigt.

Anhand der weiteren Figuren 2 und 3 wird die Hebevorrichtung 1 sowie deren genauer Aufbau und die Führung der Längsträger 17 näher erläutert. Aus der Figur 2 ist ersichtlich, daß zwei Längsträger 17 vorhanden sind, die parallel und mit Abstand zueinander verlaufen. Jeder Längsträger 17 ist in Längsrichtung gesehen in drei Abschnitte 17a, 17b und 17c nach Art einer Gliederkette unterteilt. Eine Aufteilung jedes Trägers 17 in nur zwei oder mehr als drei Abschnitte 17a, 17b und 17c ist auch möglich. Die Abschnitte 17a, 17b und 17c sind über Gelenke 24 und 25 miteinander verbunden. Die Gelenke 24 und 25 weisen jeweils quer zur Hub- und Senkrichtung S verlaufende Schwenkachsen 34 auf, so daß die oberen Abschnitte 17b und 17c während des Anhebens des Lastaufnahmemrttels 14 seitlich einklappbar sind. Die unteren Abschnitte 17a der Längsträger 17 sind an ihren oberen Enden über einen Querträger miteinander verbunden.

Auch ist ersichtlich, daß an dem Querträger 22 die Umlenkrollen 21 für das als Stahlseile ausgebildeten Zugmittel 20 gelagert sind. An den unteren Abschnitten 17a der Längsträger 17 sind jeweils starre oder um die vertikale Achse schwenkbare Aufnahmemittel 23 angeordnet, die die Last 18 in Form eines Kraftfahrzeuges oder Kraftfahrzeugteils in geeigneter Weise abstützen und somit einen Bestandteil des Lastaufnahmemittels 14 bilden. Das Lastaufnahmemittel 14 wird somit aus den unteren Abschnitten 17a des Längsträgers 17, dem Querträger 22 und den Aufnahmemitteln 23 gebildet und weist in Fahrtrichtung F des Schienenfahrzeuges 2 gesehen die Form eines auf den Kopf gestellten Buchstabens U auf. Über die Hebevorrichtung 1 ist das Lastaufnahmemittel 14 so weit anhebbar, dass sich die unteren Abschnitte 17a des Längsträgers 17 nahezu vollständig in die Führungselemente 15 hinein bzw. durch diese hindurch gefahren sind (siehe Figur 3). In der Figur 3 ist nur eine angehobene aber nicht die oberste Stellung der Lastaufnahmemittel 14 dargestellt. Das Lastaufnahmemittel 14 kann soweit angehoben werden, bis die Längsträger 17b und 17c weitestgehend waagerecht liegend angeordnet sind und die Aufnahmemittel 23 an die Unterseite der Führungselemente 15 angrenzen.

An diesen unteren Abschnitt 17a des Längsträgers 17 schließen sich nach oben die zwei weiteren Abschnitte 17b und 17c des Längsträgers 17 an. Das obere Ende des Abschnittes 17a ist über das Gelenk 24, das nach Art eines Scharniergelenkes mit einer horizontal sowie in Fahrtrichtung F ausgerichteten Schwenkachse 34 ausgebildet ist, verbunden. Das obere Ende des zweiten Abschnittes 17b des Längsträgers 17 ist wiederum über ein mit dem Gelenk 24 vergleichbaren Gelenk 25 mit dem unteren Ende des dritten Abschnittes 17c des Längsträgers 17 verbunden. Da die Gelenke 24 und 25 als Schamiergelenke ausgebildet sind, ist ausgehend von ihrer in Längsrichtung hintereinander angeordneten, d. h. aufgeklappten Stellung nur ein seitliches, vorzugsweise nach innen - in Bezug auf die Lastaufnahmemittel 14 - gerichtetes Einklappen der Abschnitte 17b und 17c möglich. Die aneinander grenzenden Kopfflächen der Abschnitte 17a, 17b und 17c liegen im ausgeklappten Zustand des Längsträgers 17 aufeinander. An die Enden der rohrförmigen Abschnitte 17a, 17b und 17c können zur Vergrößerung der Anlageflächen nicht dargestellte Endplatten angeordnet werden. in der Vertikalstellung verhält sich der ausgebildete Längsträger 17 im wesentlichen wie ein einteiliger Träger, um somit eine Führung des Lastaufnahmemittels 14 in Fahrtrichtung F sowie quer zur Fahrtrichtung F des Schienenfahrzeuges 2 zu ermöglichen. Diese klappbare Ausgestaltung des Längsträgers 17 ist gewählt worden, um einerseits das Lastaufnahmemittel 14 soweit wie möglich absenken zu können und andererseits auch zu ermöglichen, dass das Lastaufnahmemittel 14 trotz der verhältnismäßig langen Längsträger 17 soweit wie möglich in Richtung des Schienenfahrzeuges 2 angehoben werden kann.

Die Funktionsweise der Hebevorrichtung 1 mit im angehobenen Zustand des Lastaufnahmemittels 14 eingeklappten Abschnitten 17b und 17c ist anhand der Figur 3 erkennbar. An den jeweiligen oberen Enden des zweiten und dritten Abschnittes 17b und 17c ist jeweils ein stiftförmiges Mitnahmeelement 26, das auch mit einer Rolle 27 versehen werden kann, angeordnet. Dieses Mitnahmeelement 26 steht oberhalb des Führungselementes 15 im Eingriff mit einer Führungsschiene 28, die am oberen Ende des Führungselementes 15 beginnt. in diesem Bereich fahren die Mitnahmeelemente 26 des mittleren und des oberen Abschnittes 17b und 17c beim Anheben des Lastaufnahmemittels 14 aus der abgesenkten Stellung nacheinander in die Führungsschiene 28 ein. Die Führungsschiene 28 weist zunächst einen geradlinigen Abschnitt 28a auf, der parallel zur Hub-/Senkrichtung S verläuft. An diesen ersten geradlinigen Abschnitt 28a schließt sich ein in Bezug auf das Lastaufnahmemittel 14 gesehen nach innen gerichteter kurvenförmiger Abschnitt 28b an, der von einem weiteren geradlinigen und horizontalen Abschnitt 28c gefolgt ist. Dieser weitere horizontale Abschnitt 28c kann zur Optimierung der Kinematik aber auch schräg nach oben verlaufen.

Wenn nun ein Lastaufnahmemittel 14 aus der in Figur 2 dargestellten abgesenkten Stellung über das Hubwerk 19 angehoben wird, bewegen sich zunächst die oberen Abschnitte 17c des Längsträgers 17 durch die Führungselemente 15. Gleichzeitig fahren die an dem oberen Ende des dritten Abschnittes 17c angeordneten Mitnahmeelemente 26 in den ersten Abschnitt 28a der Führungsschiene 28 ein. Wenn das obere Ende des dritten Abschnittes 17c des Längsträgers 17 den Bereich des Grundrahmens 5 des Schienenfahrzeuges 2 erreicht und somit sich bereits in der Nähe der Schiene 3 befindet, beginnt der kurvenförmige Abschnitt 28b der Führungsschiene 28, so dass bei weiterem Anheben des Lastaufnahmemittels 14 die dritten Abschnitte 17c um ihr Gelenk 25 herum nach innen einklappen. Da an dem oberen Ende des zweiten Abschnitts 17b des Längsträgers 17 ebenfalls ein Mitnahmeelement 26 angeordnet ist, klappt auch dieser zweite Abschnitt 17b um die Achse des Gelenkes 24 nach innen ein, wenn das Mitnahmeelement 26 den Kurvenabschnitt 28b der Führungsschiene 23 erreicht. Das Lastaufnahmemittel 14 kann somit bei gleichzeitig geringer Bauhöhe der Hebevorrichtung weitaus höher als mit starren Längsträgern 17 angehoben werden.

Beim Absenken des Lastaufnahmemittels 14 aus der angehobenen Stellung heraus in seine abgesenkte Stellung werden die zweiten und dritten Abschnitte 17b und 17c des Längsträgers 17 über die Führungsschiene 28 und die Mitnahmeelemente 26 wieder in ihre Vertikalstellung nach außen aufgeklappt. Im abgesenkten Zustand des Lastaufnahmemittels 14 bilden die Abschnitte 17a bis 17c des Längsträgers 17 somit einen durchgehenden in Vertikalrichtung verlaufenden Längsträger 17.

Des Weiteren ist der Figur 4 zu entnehmen, dass der horizontale Abschnitt 28c der Führungselemente 28 und somit die oberen Abschnitte 17b und 17c nicht genau quer zur Fahrtrichtung F ausgerichtet sind sondern jeweils leicht schräg versetzt, so dass die oberen Abschnitte 17b und 17c aneinander vorbeigeführt werden können. Eine in Fahrtrichtung F leicht versetzte und quer zur Fahrtrichtung F ausgerichtete Anordnung der beiden Längsträger 17 ist auch möglich.

Des Weiteren ist aus der Figur 4 ersichtlich, dass zentral an dem Grundrahmen jeweils in Fahrtrichtung F gesehen nach vorne und nach hinten gerichtet jeweils eine Schubstange 31 angeordnet ist. Diese Schubstange 31 hat die Aufgabe, in sogenannten Synchronbereichen, in denen mehrere Fahrzeuge im gleichen Takt hintereinander durch eine Fertigungsstation fahren, die Schienenfahrzeuge 2 anzutreiben. Die Schubstange 31 wird hierbei über nicht dargestellte Reibrad-Antriebsstationen bewegt. Über die Länge der Schubstange 31 können die einzelnen Schienenfahrzeuge einfach auf gleichem Abstand gehalten werden. Die Fahrwerke 6a befinden sich hierbei im Leerlauf.

Die Figur 5 zeigt eine Schnittansicht von Figur 2 entlang der Schnittlinie I-I. Es ist ersichtlich, dass der Längsträger 17 als Rohrprofil ausgebildet ist und innerhalb des Führungselementes 15 über vier in einer Ebene angeordnete und um horizontale Achsen 33 drehbare Führungsrollen 29 geführt wird. Um die Führung des Längsträgers 17 möglichst präzise und spielarm einstellen zu können, sind die Führungsrollen 29 über Exzenterachsen 30 in Richtung des Längsträgers 17 anstellbar. Auch ist ersichtlich, dass das Führungselement 15 der rundrohrförmigen Längsträger 17 unter Beibehaltung eines Umfangsspattes 32 nur teilweise, vorzugsweise in einem Bereich von 230 bis 310° umgreift. Hierdurch kann der Querträger 22 durch den Umfangsspalt 22 hinein und auch hindurch angehoben werden. Der Längsträger 17 kann im Profil auch eckig ausgebildet werden.

### Bezugszeichenliste

- 1: Hebevorrichtung
- 2: Schienenfahrzeug
- 3: Schienen
- 4: Aufhängung
- 5: Grundrahmen
- 6a: angetriebene Fahrwerke
- 6b: antriebslose Fahrwerke
- 7a: Antriebsrad
- 7b: Laufrad
- 8: Führungsräder
- 9: Zwischenträger
- 10: senkrechte Achsen
- 11: senkrechte Achsen
- 12: Schwenkarme
- 13: Elektroantrieb
- 14: Lastaufnahmemittel
- 15: Führungselement
- 16: Verstrebungen
- 17: Längsträger
- 17a, b, c: Abschnitte von 17
- 18: Last
- 19: Hubwerk
- 20: Zugmittel
- 21: Umlenkrolle
- 22: Querträger
- 23: Aufnahmemittel
- 24: Gelenk
- 25: Gelenk
- 26: Mitnahmeelement
- 27: Rolle
- 28: Führungsschiene
- 28a: vertikaler Abschnitt von 28
- 28b: kurvenförmiger Abschnitt von 28
- 28c: horizontaler Abschnitt von 28
- 29: Führungsrollen
- 30: Exzenterachse
- 31: Schubstange
- 32: Umfangsspalt
- 33: Achsen
- 34: Schwenkachsen
- F: Fahrtrichtung
- S: Hub- und Senkrichtung

## Patentansprüche

1. Hebevorrichtung für Lasten, insbesondere Gehänge für Fahrzeuge oder Fahrzeugteile, mit einem Lastaufnahmemittel (14), mit zumindest einem an dem Lastaufnahmemittel (14) angeordneten und im wesentlichen in Hub- und Senkrichtung (S) ausgerichteten Längsträger (17), mit zumindest einem an einem Grundrahmen (5) angeordneten Führungselement (15) zur seitlichen Führung des Längsträgers und somit des Lastaufnahmemittels (14) sowie einem Hubwerk (19) für die Hub- und Senkbewegung des Lastaufnahmemittels (14),
**dadurch gekennzeichnet,**
**dass** der Längsträger (17) nach Art einer Gliederkette in zumindest zwei Abschnitte (17a, 17b, 17c) geteilt ist, die derart quer zur Hub- und Senkrichtung (S) klappbar miteinander verbunden sind, dass im angehobenen Zustand des Lastaufnahmemittels (14) die oberen Abschnitte (17b, 17c) des Längsträgers (17) eingeklappt sind und im abgesenkten Zustand des Lastaufnahmemittels (14) die oberen Abschnitte (17b, 17c) des Längsträgers (17) ausgeklappt sind.

2. Hebevorrichtung nach Anspruch 1,
**dadurch gekennzeichnet,**
**daß** für die Ein- und Ausklappbewegung der oberen Abschnitte (17b, 17c) diese entlang einer Führungsschiene (28) geführt sind, die an dem Grundrahmen (5) angeordnet ist.

3. Hebevorrichtung nach Anspruch 2,
**dadurch gekennzeichnet,**
**dass** für die Ein- und Ausklappbewegung an den dem Lastaufnahmemittel (14) abgewandten Enden der oberen Abschnitte (17b, 17c) jeweils ein Mitnahmeelement (26) angeordnet, das in die Führungschiene (28) eingreift, und die Führungschiene (28) im wesentlichen aus einem an das obere Ende des Führungselementes (15) angrenzenden und geradlinigen Abschnitt (28a), einen hieran anschließenden kurvenförmigen Abschnitt (28b), der in einen weiteren geradlinigen und im wesentlichen quer zur Hub- und Senkrichtung (S) ausgerichten Abschnitt (28c) mündet, besteht, so dass die oberen Abschnitte (17b, 17c) im angehobenen Zustand des Lastaufnahmemittels (14) nahezu horizontal ausgerichtet sind.

4. Hebevorrichtung nach Anspruch 3,
**dadurch gekennzeichnet,**
**dass** die Mitnahmeelemente (26) als Stifte mit einer Rolle (27) ausgebildet sind, die in die Führungschiene (28) eingreift.

5. Hebevorrichtung nach einem der Ansprüche 1 bis 4,
**dadurch gekennzeichnet,**
**dass** zwei parallel und mit Abstand zueinander verlaufende Längsträger (17) vorgesehen sind. deren untere Abschnitte (17a) über einen Querträger (22) miteinander verbunden sind.

6. Hebevorrichtung nach Anspruch 3,
**dadurch gekennzeichnet,**
**dass** die nahezu horizontal ausgerichteten Abschnitte (28c) der Führungsschiene (28) und somit die oberen Abschnitte (17b und 17c) quer zur Fahrtrichtung (F) derartig ausgerichtet sind, dass die oberen Abschnitte (17b und 17c) mindestens teilweise nebeneinander geführt sind

7. Hebevorrichtung nach einem der Ansprüche 1 bis 3,
**dadurch gekennzeichnet,**
**dass** die beiden Längsträger (17) in Fahrtrichtung (F) zueinander versetzt in unterschiedlichen Querebenen angeordnet sind.

8. Hebevorrichtung nach einem der Ansprüche 1 bis 7,
**dadurch gekennzeichnet,**
**dass** an jedem unteren Ende des unteren Abschnittes (17a) des Längsträgers (17) ein Aufnahmemittel (23) für die Last (18) angeordnet ist und somit die Aufnahmemittel (23), jeweils ein Teil der unteren Abschnitte (17a) des Längsträgers (17) und der im Bereich der oberen Enden der unteren Abschnitte angeordnete Querträger (22) ein kopfstehend U-förmiges Lastaufnahmemittel (14) bilden.

9. Hebevorrichtung nach einem der Ansprüche 1 bis 8,
**dadurch gekennzeichnet,**
**dass** das Führungselement (15) den Längsträger (17) unter Beibehaltung eines Umfangsspaltes (32) teilweise, vorzugsweise im Bereich von etwa 230 bis 310°, umgreift und der Querträger (22) durch den Umfangsspalt (32) des Führungselementes (15) bewegbar ist.

10. Hebevorrichtung nach einem der Ansprüche 1 bis 9,
**dadurch gekennzeichnet,**
**dass** das Hubwerk (19) an dem Grundrahmen (5) angeordnet ist und über ein Zugmittel (20) mit dem Querträger (22) verbunden ist.

11. Hebevorrichtung nach einem der Ansprüche 1 bis 10,
**dadurch gekennzeichnet,**
**dass** das Führungselement (15) im wesentlichen aus Führungsrollen (29) besteht, die um quer zur Hub- und Senkrichtung (S) ausgerichtete Achsen (33) drehbar sind.

12. Hebevorrichtung nach Anspruch 11,
**dadurch gekennzeichnet,**
**dass** die Führungsrollen (29) über Exzenterachsen (30) an die Oberfläche des Längsträgers (17) anstellbar sind.

13. Hebevorrichtung nach einem der Ansprüche 1 bis 12,
**dadurch gekennzeichnet,**
**dass** jeder Längsträger (17) in drei Abschnitte (17a, 17b, 17c) geteilt ist.

14. Hebevorrichtung nach einem der Ansprüche 1 bis 13.
**dadurch gekennzeichnet,**
**dass** die Abschnitte (17a, 17b, 17c) über Gelenke (24, 25) mit quer zur Hub- und Senkrichtung (S) ausgerichteten Schwenkachsen (34) miteineinander verbunden sind.

15. Hebevorrichtung nach einem der Ansprüche 1 bis 14,
**dadurch gekennzeichnet,**
**dass** der Längsträger (17) ein Rund-Rohrprofil ist.

16. Hebevorrichtung nach einem der Ansprüche 1 bis 15,
**dadurch gekennzeichnet,**
**dass** der Längsträger (17) ein im Querschnitt prismatisches Rohrprofil ist.

17. Hebevorrichtung nach einem der Ansprüche 1 bis 16,
**dadurch gekennzeichnet,**
**dass** der Grundrahmen (5) Bestandteil eines auf mindestens zwei nebeneinander angeordneten Schienen (3) verfahrbaren Schienenfahrzeuges (2) mit an dem Grundrahmen (5) angeordneten und um senkrechte Achsen (10) schwenkbaren Fahrwerken (6a, 6b) ist.

18. Hebevorrichtung nach Anspruch 17,
**dadurch gekennzeichnet,**
**dass** mindestens eine der Schienen als Tragschiene ausgebildet ist.

## Claims

1. Lifting device for loads, in particular suspension lift for vehicles or vehicle parts, having a load receiving means (14), having at least one longitudinal beam (17) which is arranged on the load receiving means (14) and is aligned essentially in the lifting and lowering direction (S), having at least one guide element (15) which is arranged on a base frame (5) and is intended for laterally guiding the longitudinal beam and thus the load receiving means (14), and a lifting gear (19) for the lifting and lowering movement of the load receiving means (14), **characterized in that** the longitudinal beam (17) is divided in the manner of a link chain into at least two sections (17a, 17b, 17c) which are interconnected foldably transversely to the lifting and lowering direction (S) in such a manner that in the lifted state of the load receiving means (14) the upper sections (17b, 17c) of the longitudinal beam (17) are folded and in the lowered state of the load receiving means (14) the upper sections (17b, 17c) of the longitudinal beam (17) are unfolded.

2. Lifting device according to Claim 1, **characterized in that**, for the folding and unfolding movement of the upper sections (17b, 17c), the latter are guided along a guide rail (28) which is arranged on the base frame (5).

3. Lifting device according to Claim 2, **characterized in that**, for the folding and unfolding movement, a respective carry-along element (26) which engages in the guide rail (28) is arranged at those ends of the upper sections (17b, 17c) which face away from the load receiving means (14), and the guide rail (28) essentially comprises a section (28a) which is adjacent to the upper end of the guide element (15) and is straight, and an adjoining, curved section (28b) which leads into a further straight section (28c) aligned essentially transversely to the lifting and lowering direction (S), so that the upper sections (17b, 17c) are aligned virtually horizontally in the lifted state of the load receiving means (14).

4. Lifting device according to Claim 3, **characterized in that** the carry-along elements (26) are designed as pins with a roller (27) which engages in the guide rail (28).

5. Lifting device according to one of Claims 1 to 4, **characterized in that** two longitudinal beams (17) which run parallel to and at a distance from each other and whose lower sections (17a) are connected to each other via a cross beam (22) are provided.

6. Lifting device according to Claim 3, **characterized in that** the virtually horizontally aligned sections (28c) of the guide rail (28) and therefore the upper sections (17b and 17c) are aligned transversely to the direction of travel (F) in such a manner that the upper sections (17b and 17c) are at least partially guided next to each other.

7. Lifting device according to one of Claims 1 to 3, **characterized in that** the two longitudinal beams (17) are arranged offset with respect to each other in the direction of travel (F) in different transverse planes.

8. Lifting device according to one of Claims 1 to 7, **characterized in that** a receiving means (23) for the load (18) is arranged at each lower end of the lower section (17a) of the longitudinal beam (17), and the receiving means (23), in each case part of the lower sections (17a) of the longitudinal beam (17) and the cross beam (22), which is arranged in the region of the upper ends of the lower sections, thus form an upside-down U-shaped load receiving means (14).

9. Lifting device according to one of Claims 1 to 8, **characterized in that** the guide element (15) grips partially around the longitudinal beam (17), preferably in the region of approximately 230 to 310°, retaining a circumferential gap (32), and the cross beam (22) can be moved through the circumferential gap (32) of the guide element (15).

10. Lifting device according to one of Claims 1 to 9, **characterized in that** the lifting gear (19) is arranged on the base frame (5) and is connected to the cross beam (22) via a traction means (20).

11. Lifting device according to one of Claims 1 to 10, **characterized in that** the guide element (15) essentially comprises guide rollers (29) which are rotatable about axes (33) aligned transversely to the lifting and lowering direction (S).

12. Lifting device according to Claim 11, **characterized in that** the guide rollers (29) can be positioned on the surface of the longitudinal beam (17) via eccentric axes (30).

13. Lifting device according to one of Claims 1 to 12, **characterized in that** each longitudinal beam (17) is divided into three sections (17a, 17b, 17c).

14. Lifting device according to one of Claims 1 to 13, **characterized in that** the sections (17a, 17b, 17c) are connected to one one another via joints (24, 25) having pivot axes (34) aligned transversely to the lifting and lowering direction (S).

15. Lifting device according to one of Claims 1 to 14, **characterized in that** the longitudinal beam (17) is a round tubular profile.

16. Lifting device according to one of Claims 1 to 15, **characterized in that** the longitudinal beam (17) is a tubular profile which is prismatic in cross section.

17. Lifting device according to one of Claims 1 to 16, **characterized in that** the base frame (5) is part of a rail vehicle (2) which can be moved on at least two rails (3) arranged next to each other and has running-gear mechanisms (6a, 6b) which are arranged on the base frame (5) and can be pivoted about vertical axes (10).

18. Lifting device according to Claim 17, **characterized in that** at least one of the rails is designed as a supporting rail.

## Revendications

1. Dispositif de levage pour charges, notamment nacelle de suspension pour véhicules ou pièces de véhicules, comprenant un moyen de support de charge (14), au moins un longeron porteur (17) disposé sur le moyen de support de charge (14) et orienté sensiblement dans la direction de levage et d'abaissement (S), au moins un élément de guidage (15) disposé sur un châssis ou cadre de base (5) et destiné au guidage latéral du longeron porteur et ainsi du moyen de support de charge (14), ainsi qu'un groupe de levage (19) pour le mouvement de levage et d'abaissement du moyen de support de charge (14),
**caractérisé en ce que** le longeron porteur (17) est divisé à la manière d'une chaîne à maillons en au moins deux tronçons (17a, 17b, 17c) qui sont reliés mutuellement de manière à pouvoir être repliés transversalement à la direction de levage et d'abaissement (S), de façon telle que dans l'état soulevé du moyen de support de charge (14), les tronçons supérieurs (17b, 17c) du longeron porteur (17) soient repliés, et dans l'état abaissé du moyen de support de charge (14), les tronçons supérieurs (17b, 17c) du longeron porteur (17) soient dépliés.

2. Dispositif de levage selon la revendication 1, **caractérisé en ce que** pour le mouvement de repliage et de dépliage des tronçons supérieurs (17b, 17c), ceux-ci sont guidés le long d'une glissière de guidage (28) qui est disposée sur le cadre de base (5).

3. Dispositif de levage selon la revendication 2, **caractérisé en ce que** pour le mouvement de repliage et de dépliage, sur les extrémités des tronçons supérieurs (17b, 17c), éloignées du moyen de support de charge (14), est respectivement disposé un élément entraîneur (26) qui s'engage dans la glissière de guidage (28), et **en ce que** la glissière de guidage (28) est essentiellement constituée d'un tronçon (28a) rectiligne adjacent à l'extrémité supérieure de l'élément de guidage (15), d'un tronçon (28b) de forme courbe se raccordant au précédent et débouchant dans un autre tronçon (28c) rectiligne, orienté sensiblement transversalement à la direction de levage et d'abaissement (S), de sorte que les tronçons supérieurs (17b, 17c), dans l'état soulevé du moyen de support de charge (14), sont orientés pratiquement à l'horizontale.

4. Dispositif de levage selon la revendication 3, **caractérisé en ce que** les éléments entraîneurs (26) sont réalisés sous forme de broches avec un galet (27) qui s'engage dans la glissière de guidage (28).

5. Dispositif de levage selon l'une des revendications 1 à 4, **caractérisé en ce que** sont prévus deux longerons porteurs (17) s'étendant parallèlement l'un à l'autre et à distance l'un de l'autre, dont les tronçons inférieurs (17a) sont reliés l'un à l'autre par une traverse (22).

6. Dispositif de levage selon la revendication 3, **caractérisé en ce que** les tronçons (28c) de la glissière de guidage (28), qui sont orientés sensiblement à l'horizontale, et ainsi les tronçons supérieurs (17b et 17c), sont orientés transversalement à la direction de déplacement (F) de façon telle que les tronçons supérieurs (17b et 17c) soient guidés au moins partiellement l'un à côté de l'autre.

7. Dispositif de levage selon l'une des revendications 1 à 3, **caractérisé en ce que** les deux longerons porteurs (17) sont disposés de manière réciproquement décalés dans la direction de déplacement (F), dans des plans transversaux différents.

8. Dispositif de levage selon l'une des revendications 1 à 7, **caractérisé en ce qu'**à chaque extrémité inférieure du tronçon inférieur (17a) du longeron porteur (17) est disposé un moyen de réception (23) pour la charge (18), et **en ce que** les moyens de réception (23), respectivement une partie des tronçons inférieurs (17a) du longeron de support (17), et la traverse (22) disposée dans la zone des extrémités supérieures des tronçons inférieurs, forment ainsi un moyen de support de charge (14) en forme de U renversé.

9. Dispositif de levage selon l'une des revendications 1 à 9, **caractérisé en ce que** l'élément de guidage (15) entoure partiellement, de préférence sur une plage de 230 à 310°, le longeron porteur (17) en laissant libre un intervalle de périphérie (32), et la traverse (22) est mobile à travers l'intervalle de périphérie (32).

10. Dispositif de levage selon l'une des revendications 1 à 9, **caractérisé en ce que** le groupe de levage (19) est disposé sur le cadre de base (5) et est relié à la traverse (22) par l'intermédiaire d'un moyen de traction (20).

11. Dispositif de levage selon l'une des revendications 1 à 10, **caractérisé en ce que** l'élément de guidage (15) est essentiellement constitué de galets de guidage (29) qui peuvent tourner autour d'axes (33) orientés transversalement à la direction de levage et d'abaissement (S).

12. Dispositif de levage selon la revendication 11, **caractérisé en ce que** les galets de guidage (29) peuvent être appliqués contre la surface du longeron porteur (17), à l'aide d'axes excentriques (30).

13. Dispositif de levage selon l'une des revendications 1 à 12, **caractérisé en ce que** chaque longeron porteur (17) est divisé en trois tronçons (17a, 17b, 17c).

14. Dispositif de levage selon l'une des revendications 1 à 13, **caractérisé en ce que** les tronçons (17a, 17b, 17c) sont reliés mutuellement par l'intermédiaire d'axes d'articulation (34) orientés transversalement à la direction de levage et d'abaissement (S).

15. Dispositif de levage selon l'une des revendications 1 à 14, **caractérisé en ce que** le longeron porteur (17) est un profilé tubulaire rond.

16. Dispositif de levage selon l'une des revendications 1 à 15, **caractérisé en ce que** le longeron porteur (17) est un profilé tubulaire prismatique en section transversale.

17. Dispositif de levage selon l'une des revendications 1 à 6, **caractérisé en ce que** le cadre de base (5) est une partie constitutive d'un chariot sur rail (2) qui se déplace sur au moins deux rails (3) placés côte à côte, et comporte des trains de roulement (6a, 6b) disposés sur le cadre de base (5) et pouvant pivoter autour d'axes (10) verticaux.

18. Dispositif de levage selon la revendication 17, **caractérisé en ce que** l'un au moins des rails est réalisé en tant que rail porteur.
